Europäisches Patentamt

European Patent Office

Office européen des brevets

(19)

(11) Veröffentlichungsnummer: **0 002 858**
**B1**

(12) **EUROPÄISCHE PATENTSCHRIFT**

(45) Veröffentlichungstag der Patentschrift: **24.03.82**

(21) Anmeldenummer: **78200364.4**

(22) Anmeldetag: **13.12.78**

(51) Int. Cl.³: **C 02 F 9/00, B 01 D 23/04**
**//C02F1/52, C02F3/04,**
**C02F3/12**

(54) Verfahren zur Sanierung von bei Dauerbetrieb überlasteten Kläranlagen und Kläranlage zur Durchführung eines derartigen Verfahrens.

(30) Priorität: **16.12.77 DE 2756171**

(43) Veröffentlichungstag der Anmeldung:
**11.07.79 Patentblatt 79/14**

(45) Bekanntmachung des Hinweises auf die Patenterteilung:
**24.03.82 Patentblatt 82/12**

(84) Benannte Vertragsstaaten:
**BE CH DE FR GB IT LU NL SE**

(56) Entgegenhaltungen:
**FR - A - 1 564 226**
**DE - A - 1 658 094**
**DE - A - 2 424 563**
**DE - A - 2 621 698**

(73) Patentinhaber: **HOECHST AKTIENGESELLSCHAFT**
**Zentrale Patentabteilung Postfach 80 03 20**
**D-6230 Frankfurt/Main 80 (DE)**

(72) Erfinder: **Disselbeck, Dieter**
**Am Rehsteig 3**
**D-6232 Bad Soden (DE)**

Courier Press, Leamington Spa, England.

# 0 002 858

Verfahren zur Sanierung von bei Dauerbetrieb überlasteten Kläranlagen und Kläranlage zur
Durchführung eines derartigen Verfahrens

Aus der DE—OS 26 21 698 ist eine Anlage und ein Verfahren zur Reinigung von Abwasser und zur Verminderung des chemischen und des biochemischen Sauerstoffbedarfs, der zur weiteren Reinigung von Abwasser erforderlich ist, von dem die Feststoffe durch Vorklärung abgetrennt sind, bekannt, wobei man das Abwasser mit Flockungshilfsmitteln versetzt und die Vorklärung mit der Abtrennung des größten Teils der kolloid-dispersen Anteile in der Weise verbindet, daß man dieses mit den Flockungshilfsmitteln versetzte, feststoffhaltige Abwasser unter Einwirkung der Schwerkraft durch ein in einer Aufhängevorrichtung befindliches Stützgewebe leitet und dabei A) zuerst ein Kombinationsfilter aus a) diesem Stützgewebe und b) einer primären Filterschicht aus abgetrennten Feststoffen bildet und B) das weitere Abwasser durch dieses Kombinationsfilter vom größten Teil der Feststoffteilchen befreit. Dieses Verfahren ist seiner ganzen Konzeption und Zielsetzung nach als erste Stufe einer mechanischbiologischen Abwasserreinigungsanlage konzipiert.

Ein großer Teil der zur Zeit betriebenen älteren Kläranlagen ist überlastet. Diese Anlagen erreichen nicht mehr die geforderter Reinigungsleistung, da die Abwassermengen gegenüber denen, die beim Bau der Anlage zugrundegelegt waren, gestiegen sind. In vielen Ländern sind außerdem aufgrund des Umweltschutzes neue gesetzliche Bestimmungen erlassen worden, die höhere Anforderungen an die Qualität des gereinigten Abwasser stellen und daher weitere Investitionen erfordern.

Übliche Kläranlagen sind hauptsächlich auf dem Prinzip von Sedimentationsanlagen aufgebaut, die mit Vorrichtungen für die biologische Behandlung der Abwässer verbunden sind. Die sich anschließende biologische Behandlung der Abwässer geschieht auf verschiedene Art, z.B. Umwälzung, Luftinjektion, Tropfkörperbehandlung u.a.. Wichtig ist dabei, daß die Abwässer mit dem Sauerstoff der Luft intensiv in Berührung kommen und die Schmutzstoffe somit, meist mit Hilfe von Bakterien, biologisch abgebaut werden.

Eine Sanierung dieser Kläranlagen in der bisher üblicher Weise erfordert zumeist kostspielige bauliche Erweiterungsmaßnahmen mit relative großem Grundstücksbedarf. Oftmals reicht die zur Verfügung stehende Grundstücksfläche nicht aus, so daß an einem anderen Standort die Kläranlage neu geplant, genehmigt und gebaut werden muß.

Der Erfindung liegt nun die Aufgabe zugrunde, die Sanierung vorhandener bei Dauerbetrieb überlasteter Kläranlagen den Anforderungen entsprechend mit vergleichsweise geringen Kosten ohne umfangreiche Neubaumaßnahme mit entsprechendem Grundstücksbedarf zu ermöglichen.

Erfindungsgemäß wird die Aufgabe dadurch gelöst, daß Zusätzlich zu der in der Klärtechnik üblichen Sedimentations- und biologischen Abbauvorgänge ein leistungsfähiges und anpassungsfähiges spezielles Filtrierverfahren nach und gegebenenfalls auch zusätzlich vor der jeweils überlasteten Behandlungsstufe der vorhandenen Kläranlage zum Einsatz kommt. Bei diesem bereits oben erwähnten Verfahren wird das Abwasser zweckmäßig geflockt und hängenden gewebten Filterelementen, vorzugsweise aus einem synthetischen Gewebe, zugeführt. Die Schmutzstoffe bauen am Gewebe eine Filterschicht auf. Diese bewirkt, daß neben den absetzbaren Stoffen auch übrige, nämlich kolloide und zum Teil auch gelöste Wasserinhaltsstoffe weitgehend durch Stofftransport- und Anlagerungsvorgänge, und zwar physikalische und zum Teil auch chemische Vorgänge von der Flüssigkeit abgetrennt und zurückgehalten werden. Gleichzeitig erfolgt durch die Schwerkraft eine Konzentrierung der abgetrennten Schmutzstoffe.

Das erfindungsgemäße Verfahren hat sich also zum Ziel gesetzt, Kläranlagen, in denen wenigstens eine Behandlungsstufe im Dauerbestrieb überlastet ist, weil die Abwassermengen gegenüber denen, die beim Bau der Anlage zugrunde gelegt waren, gestiegen sind und/oder neue gesetzliche Bestimmungen höhere Anforderungen an die Qualität des gereinigten Abwassers stellen, an die geänderten Voraussetzungen anzupassen und so zu sanieren, wobei die vorhandene Kläranlage weiter sinnvoll genutzt werden können und nicht etwa durch neue, größere Anlagen ersetzt werden müssen. Ziel der Erfindung ist es, funktionstüchtige Anlagen — die Funktionstüchtigkeit einer Anlage ist durch deren Konzeption und Auslegung bedingt — die ursprünglich den Anforderungen genügt haben und im Laufe der Zeit durch höher gesetzte Anforderungen überlastet sind, ohne große Investitionen so zu modifizieren, daß die Leistung dieser Anlagen gegenüber dem ursprünglichen Zustand vergrößert und verbessert wird.

Gegenstand der Erfindung ist also das im Anspruch 1 angeführte Verfahren und die zur Durchführung dieses Verfahrens dienende Kläranlage, die im Anspruch 6 angegeben ist.

Bei diesem Filtrierverfahren wird für die Klärung eines Kubikmeters Abwasser nur ein Behandlungsraum von 0,2 bis 1 m³ aus einem vorzugsweise textilen hochfesten Gewebe benötigt. Die Filtrierelemente werden hängend angeordnet, d.h. die Filtration erfolgt mit Hilfe der Schwerkraft. Damit können entsprechende Filteranlagen, z.B. vorgefertigt in Montagebauweise, oberirdisch errichtet werden und erforderlichenfalls über den vorhandenen Becken angeordnet werden. Sie sind im Baukastensystem ausbaufähig und können den jeweiligen Anforderungen schnell und flexibel angepaßt werden, was beispielsweise bei einer Stahlbeton-Technologie nicht möglich ist.

Das Filter soll aus einem solchen Material hergestellt sein, daß es die durch das Füllgut erzeugten Kräfte aufnahmen kann. Im allgemeinen ist das Filter sackförmig, vor allem zylindrisch geformt und ist

2

mittels einer Aufhängevorrichtung, beispielsweise einem Tragring aufgehängt. Nach Beendigung des Filtriervorganges kann es beispielsweise über eine am unteren Teil des Filters vorhandene Schließvorrichtung nach unten entleert werden. Im allgemeinen besitzt das Filter einen Inhalt von mehr als 60 Litern, meistens 1 bis 5 m³. Es kann im Prinzip aus jedem Material bestehen, das diese Aufgabe erfüllt, z.B. auch aus Maschendraht. Zweckmäßig verwendet man aber sackartige Stützgewebe aus Filament- oder Stapelfasergarnen, die aus Synthesefasern hergestellt worden sind, wobei das Material auch verrottungsbeständig sein soll. Besonders vorteilhaft sind Polyester, wie Polyäthylenterephthalat, Polybutylenterephthalat, Poly-1,4-dimethylolcyclohexan-terephthalat bzw. analogen Produkten auf Basis von Isophthalsäure, Polyamid wie Poly(hexamethylenadipinsäureamid), Polyhexamethylensebacinsäureamid, Polyundecansäureamid, Polycaprolactam, Poly-p-phenylenterephthalamid. Geeignet sind auch Säcke aus Polyacrylnitril, aus Copolymeren von Acrylnitril und wenigstens einem weiteren Monomeren, deren Acrylnitrilgehalt wenigstens 85% beträgt, aus Polyvinylchlorid oder aus Polyolefinen wie Polyäthylen oder Polypropylen.

Das Filtergewebe weist zweckmäßig eine nicht zu dichte Fadenstellung in Kette und Schuß auf, weil bei einer zu dichten Einstellung der Durchsazt stark absinken kann. Bei Polyäthylenterephthalatfäden mit einer Stärke von dtex. 2200 ist eine Gewebeeinstellung von 7,8 bis 9,2, vorzugsweise 8,2 bis 8,8 Fäden pro cm in Kett- und Schußrichtung bevorzugt. Bei einer anderen Fadenstärke ist die Fadenstellung entsprechend zu ändern. Bei Verwendung von Geweben aus anderen Stoffen lassen sich von Fachmann die Einstellungen unter Berücksichtigung der Dehnungsverhältnisse dieser Gewebe ohne große Schwierigkeiten ermitteln.

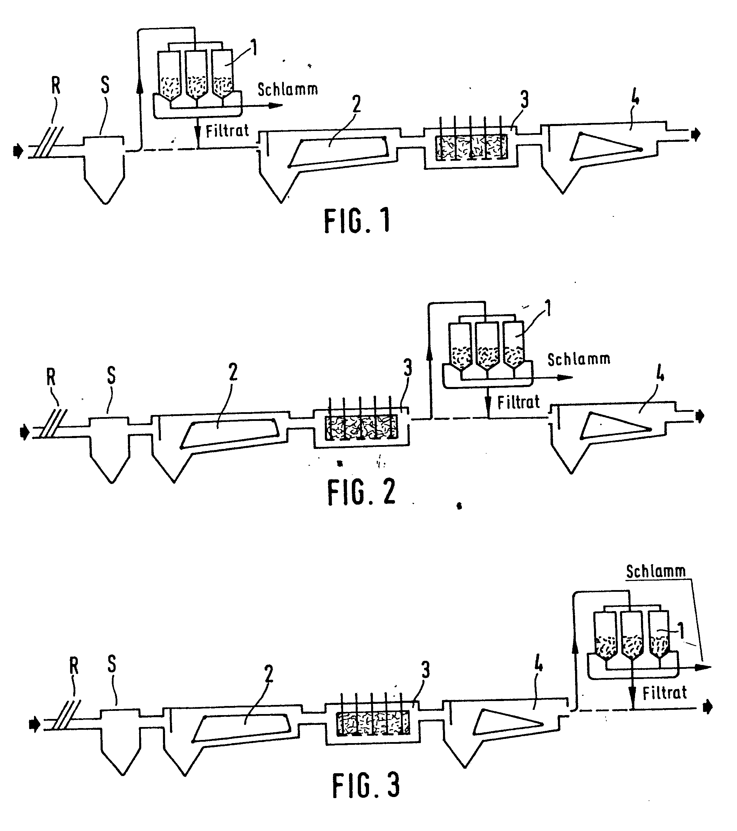

Die Filtriereinrichtung kann nach dem Sandfang der Kläranlage errichtet und damit entweder das gesamte Rohabwasser oder nur ein Teilstrom davon behandelt werden (s. Figur 1). Durch das Filter wird die Belastung des der Filtriereinrichtung zugeführten Abwasser je nach Beaufschlagung der Filter (1) beim Chemischen Sauerstoffbedarf (CSB) und beim biochemischen Sauerstoffbedarf (BSB) jeweils um 50—80% und beim Phosphat um 90—98% vermindert sowie der größte Teil der Feststoffe abgetrennt. Auf diese Weise werden die Vorklärung (2) und die biologische Behandlungsstufe (3), z.B. eine Belebtschlamm- oder Tropfkörper-Anlage wirksam entlastet. Dieser bestehenden Anlage ist normalerweise eine Nachklärung (4) angeschlossen.

Das Verfahren eignet sich für die Sanierung von älteren, kommunalen Kläranlagen, die beispielsweise für einen BSB-Abbau von 80—85%, bezogen auf das Rohwasser ausgelegt wurden. Nach den geltenden Bestimmungen wird ein BSB-Wert von höchstens 25 mg/l im Ablauf gefordert, was bei einem normalen Einlauf kommunalen Abwassers mit einem BSB-Wert von 300 mg/l einem Abbau von 92% entspricht. Soll eine derartige Kläranlage für beispielsweise 10 000 Einwohner erfindungsgemäß saniert werden, so wird z.B. ein Teilstrom von 50%, das sind etwa 50m³/h des Rohwassers einer Filtriereinrichtung der beschriebenen Art zugeführt. Bei einer Beaufschlagung von 5 m³/h je Filtereinheit von 3 m Höhe und 1 m Durchmesser wird der BSB-Wert um etwa 70% reduziert, was einer solchen Menge an Schwebstoffen entspricht, für die pro Tag 210 kg Sauerstoff benötigt wird, Diese Schmutzstoffe werden, dabei in einer stark eingedickten Form entfernt.

Bei der Vereinigung dieses gereinigten Wassers mit der anderen Hälfte des Rohabwassers erhält man ein teilgereinigtes Rohwasser mit einem BSB-Wert von 195 mg/l. Die nach folgende Behandlung dieses Abwassers in der bestehenden Kläranlage führt unter Nutzung des vergleichsweise hohen Sauerstoffgehalts im filtrierten Teilstrom zum geforderten Ablaufwert. Bei dieser beispielhaften Ausführung des erfindungsgemäßen Verfahrens wird für die Sanierung der o.a. Kläranlage eine Filtriereinrichtung mit 10 Einheiten der genannten Abmessungen benötigt. Sieht man die gleiche Anzahl von Filteren für einen wechselweisen Betrieb vor, so beträgt der Platzbedarf einschließlich der Flockungsmittelstation nur etwa 100 m². Der Platzbedarf läßt sich weiter vermindern, wenn die Filtriereinrichtung über den vorhandenen Behandlungsbecken angeordnet ist.

Eine andere Möglichkeit, vorhandene uberlastete Kläranlagen erfindungsgemäß zu sanieren, besteht darin, die Filtriereinrichtung nach der biologischen Behandlungsstufe (s. Figur 2) anzuordnen. Hierbei wird ein wesentlicher Teil der Belebtschlammflocken abgetrennt und eingedickt, was zu einer wirksamen Entlastung der Nachklärung führt. Auch eine Kombination der Vorklärung und der Nachklärung ist möglich.

Eine dritte Möglichkeit ist die Anordnung der Filtriereinrichtung am Auslauf einer überlasteten Kläranlage (s. Figur 3).

Überhaupt kann die Filtriervorrichtung überall dort mit Erfolg eingesetzt werden, wo im Rahmen der Abwasserbehandlung eine Sedimentation auftritt, wobei die Schwebstoffe einfach und schnell entfernt werden können.

In allen drei Fällen ist es möglich und vielfach zweckmäßig, der Filtriereinrichtung ein Abwasser zuzuführen, das mit Flockungsmitteln behandelt ist. Als solche seien z.B. Fällungsmittel wie Aluminiumchlorid, Aluminiumsulfat, Eisenchlorid und oder Calciumhydroxyd genannt. Diese werden vorteilhaft mit Flockungshilfsmitteln im engeren Sinne, wie Polyacrylat- und/oder Polyacrylamid-Typen kombiniert. Durch eine solche Behandlung lassen sich neben den suspendierten Teilchen zum Teil durch Adsorption an den geflockten Verbindungen auch die Phosphate weitgehend abtrennen, so daß die Gefahr einer Eutrophierung der Gewässer vermindert wird. Dies ist von besonderer Bedeutung bei der Ausführungsform gemäß Figur 3. Bei einer solchen Behandlung des aus der Kläranlage ab-

# 0 002 858

laufenden Wassers lassen sich so auch die Einleitevorschriften für den Vorfluter leichter erfüllen.

In den Zeichnungen haben die mit Buchstaben und Ziffern versehenen Anlageteile folgende Bedeutung:

R = Rechen, S = Sandfang, 1 = Filtriereinrichtung, 2 = Absetzbecken für Vorklärung, 3 = Belebtschlamm- oder Tropfkörperanlage und 4 = Absetzbecken für Nachklärung.

Nach einer weiteren Ausführungsform ist es möglich, die Filterelemente, mit deren Hilfe die Teilreinigung des Abwassers erfolgt, noch in der Weise zu modifizieren, daß man das durch die Filterwandung austretende Filtrat direkt über ein großflächiges Element als biologisches Filter leitet und in diesem eine unvollständige biologische Behandlung durchführt. Solche modifizierten Filter lassen sich so konstruieren, daß das Schwerkraftfilter und das biologische Filter in einem Baukörper vereinigt sind. Es hat sich nämlich gezeigt, daß sich das Filtrat, das teils als dünner Film an der Außenwand entlangläuft, teils aber auch in Form dünner Strahlen durch die Wandung austritt, durch seine feine Verteilung beim Austritt aus dem Filterelement bis nahe an den Sättigungspunkt mit Sauerstoff anreichert. So wurde z.B. bei einer Wassertemperatur von 17°C ein Sauerstoffgehalt von 8—9 mg/l festgestellt, obwohl das dem Filter zugeführte Abwasser einen Gehalt von nur 1,5—2 mg/l aufwies. Diese durch die spezielle Art des Filtriervorganges bewirkte Sauerstoffanreicherung des Filtrats und seine feine Verteilung werden also für die biologische Behandlung des Filtrats im allgemeinen und speziell nach dieser besonderen Ausführungsform genutzt. Auf den Flächen des biologischen Filters bildet sich dann ein biologischer Rasen, der die im Filtrat gelösten restlichen Schmutzstoffe zum Teil abbaut, wobei der dazu benötigte Sauerstoff der Luft entzogen wird. Bei diesem kombinierten Schwerkraft- und biologischen Filter sind die biologischen Filter vorzugsweise als großflächige Elemente aus Kunststoff, z.B. Kunststoff-Tropfkörper, kreisförmig, oval oder rechteckig um die Gewebefilter angeordnet. Sie können auch aus Schüttgut von Materialien mit großer Oberfläche, wie Bimsstein, Lavasteinen, Kunststoffgranulat bestehen.

## Patentansprüche

1. Verfahren zur Sanierung von Kläranlagen, in denen wenigstens eine Behandlungsstufe im Dauerbetrieb über lastet ist, dadurch gekennzeichnet, daß man die gesamte Abwassermenge oder einen Teilstrom davon nach der überlasteten Behandlungsstufe oder je einen Teilstrom vor und nach der überlasteten Behandlungsstufe einer Filtriereinrichtung aus hängenden gewebten Filterelementen zuführt, dort am Gewebe eine Filterschicht aus den im Wasser befindlichen festen Teilchen aufbaut und hiermit nicht nur die absetzbaren Stoffe, sondern auch kolloide und gelöste Wasserinhaltsstoffe mittels Schwerkraftfiltration abtrennt und das Filtrat als solches oder nach Vereinigung mit dem unbehandelten Teilstrom in üblicher Weise weiterbehandelt oder bei entsprechender Anordnung der Filtriereinrichtung ablaufen läßt.

2. Verfahren nach Anspruch 1, dadurch gekennzeichnet, daß man das durch die Filterwandung austretende Filtrat über ein großflächiges Element als biologisches Filter ablaufen läßt und so einen Teil der biologischen Reinigung bewirkt.

3. Verfahren nach Anspruch 1 oder 2, dadurch gekennzeichnet, daß die Filtriereinrichtung nach dem Sandfang und/oder vor der biologischen Behandlungsstufe und/oder vor dem Auslauf der Kläranlage angeordnet ist.

4. Verfahren nach einem oder mehreren der Ansprüche 1 bis 3, dadurch gekennzeichnet, daß man das Abwasser mit Flokkungsmitteln oder mit einer Kombination von Flockungs- und Flockungshilfsmitteln behandelt und das behandelte Abwasser der Filtriervorrichtung zuführt.

5. Verfahren nach Anspruch 4, dadurch gekennzeichnet, daß man das Abwasser mit Aluminiumchlorid, Aluminiumsulfat, Eisenchlorid und/oder Calciumhydroxyd als Flockungsmittel und mit Polyacrylat- und/oder Polyacrylamid-Typen als Flockungshilfsmittel behandelt.

6. Kläranlage zur Durchführung des Verfahrens nach einem oder mehreten der Ansprüche 1 bis 5, bestehend aus üblichen Behandlungsstufen, dadurch gekennzeichnet, daß nach der überlasteten Behandlungsstufe eine Filtriereinrichtung aus hängenden gewebten Schwerkraft-Filterelementen angeordnet ist, an deren Innenseiten sich eine, aus den im Wasser befindlichen festen Teilchen aufgebaute, Filterschicht befindet, die eine weitgehende Entfernung von Wasserinhaltsstoffen bewirkt.

7. Kläranlage nach Anspruch 6, dadurch gekennzeichnet, daß die Filtriereinrichtung jeweils über den vorhandenen Behandlungsbecken angeordnet ist.

8. Kläranlage nach Anspruch 6 oder 7, dadurch gekennzeichnet, daß das Schwerkraftfilter mit einem biologischen Filter in einem Baukörper vereinigt ist.

## Revendications

1. Procédé pour l'assainissement de stations d'épuration d'eaux, dans lesquelles au moins un étage de traitement est surchargé en régime permanent, caractérisé en ce qu'on achemine la totalité de la quantité d'eaux résiduaires ou un courant partiel de cette eau, après l'étage de traitement surchargé, ou un courant partiel avant et un courant partiel après l'étage de traitement surchargé, à une installation de filtration constituée d'éléments filtrants tissés et suspendus; on y provoque la formation

4

et l'accumulation sur l'étoffe d'une couche filtrante formée par les particules solides se trouvant dans l'eau et l'on sépare ainsi par une filtration sous l'effet de la gravité non seulement les substances pouvant se déposer mais aussi les matières colloïdales et les matières contenues en dissolution dans l'eau, et l'on soumet le filtrat, tel quel ou après l'avoir combiné au courant partiel non traité, à la poursuite de traitement de façon usuelle ou bien, dans le cas d'une disposition correspondante de l'installation de filtration, on laisse s'écouler le filtrat obtenu.

2. Procédé selon la revendication 1, caractérisé en ce qu'on laisse le filtrat sortant de la paroi filtrante passer sur un élément à grande surface de contact jouant le rôle d'un filtre biologique et l'on effectue ainsi une partie de l'épuration biologique.

3. Procédé selon la revendication 1 ou 2, caractérisé en ce que l'on dispose l'installation de filtration après le dessableur et/ou avant l'étage de traitement biologique et/ou avant la sortie de la station de clarification et d'épuration.

4. Procédé selon une ou plusieurs des revendications 1 à 3, caractérisé en ce qu'on traite l'eau résiduaire avec des agents de floculation ou avec une combinaison d'agents de floculation et d'adjuvants de floculation, et en ce qu'on achemine à l'installation de filtration l'eau résiduaire ainsi traitée.

5. Procédé selon la revendication 4, caractérisé en ce qu'on traite l'eau résiduaire avec du chlorure d'aluminium, du sulfat d'aluminium, du chlorure de fer et/ou de l'hydroxyde de calcium comme agent de floculation et avec des agents du type polyacrylate et/ou polyacrylamide comme adjuvants de floculation.

6. Station d'épuration pour la mise en oeuvre du procédé selon une ou plusieurs des revendications 1 à 5, cette station comportant les étages usuels de traitement et étant caractérisée en ce qu'après l'étage de traitement surchargé, il est disposé une installation de filtration, formée d'éléments filtrants tissés et suspendus, fonctionnant par filtration sous l'effet de la gravité et du côté interne desquels se trouve une couche filtrante formée par les particules solides se trouvant dans l'eau, et qui effectue une élimination poussée des matières contenues dans l'eau.

7. Station d'épuration selon la revendication 6, caractérisée en ce que l'installation de filtration est disposée à chaque fois au-dessus des bassins de traitement existants.

8. Station d'épuration selon la revendication 6 ou 7, caractérisée en ce que le filtre fonctionnant sous l'effet de la gravité est combiné dans un même corps à un filtre biologique.

## Claims

1. A method to upgrade clarifying plants in which at least one treatment stage is overloaded in long-term continuous operation characterized in that the total amount of the waste water or a part stream thereof separated subsequent to the overloaded stage, or two part streams one of which being separated prior and one subsequent to said overloaded treatment stage are passed to a filter device of suspended woven filter elements thus forming along the fabric a filter layer of the solid particles contained in the water and removing by this filter and by means of gravity not only the matter capable of being settled, but also colloidal and dissolved ingredients of the water, and that the filtrate is treated per se or after combination with the untreated part stream in conventional manner or is discharged when the filter device is appropriately installed.

2. A method as claimed in claim 1 characterized in that the filtrate emerging through the wall of said filter is passed through a large-area element acting as a biological filter, thus effecting partial biological purification.

3. A method as claimed in claim 1 or 2 characterized in that the filter device is installed at the inlet and/or before the biological treatment stage and/or before the exit of the clarifying plant.

4. A method as claimed in claim 1 or more of claims 1 to 3 characterized in that the waste water is treated with flocculating agents or with a combination of flocculating agents and flocculating auxiliaries and the treated waste water is passed to the filter device.

5. A method as claimed in claim 4 characterized in that that the waste water is treated with aluminum chloride, aluminum sulfate, ferric chloride and/or calcium hydroxide as the flocculating agent and with a polyacrylate and/or polyacryl amide grade as a flocculating auxiliary.

6. A clarifying plant for carrying out the method according to one or more of claims 1 to 5 consisting of conventional treatment stages characterized in that a filter device of suspended woven filter elements for filtration by gravity is installed subsequent to the overloaded treatment stage, at the inner walls of which a filter layer is present which has been formed from the solid particles contained in the water and causes to a far extent a removal of ingredients of the water.

7. A clarifying plant as claimed in claim 6 characterized in that the filter device is arranged over the corresponding treatment basin.

8. A clarifying plant as claimed in claim 6 or 7 characterized in that the filter device for filtration by gravity is combined with a biological filter to a single body of building.

0 002 858

FIG. 1

FIG. 2

FIG. 3